# EUROPEAN PATENT APPLICATION

(11) **EP 1 518 837 A1**
(43) Date of publication of application: **30.03.2005**
(21) Application number: 03723390.5
(22) Date of filing: 15.05.2003
(51) Int. Cl.: C03C 17/02, C03C 17/25

(54) **HYDROPHILIC, ANTI-FOGGING, AND ANTI-STAINING THIN FILM AND METHOD FOR PREPARATION THEREOF**

(30) Priority: 31.05.2002 JP 2002159616
(71) Applicant: TOYOTA JIDOSHA KABUSHIKI KAISHA, Toyota-shi, Aichi 471-8571 (JP); Kabushiki Kaisha Tokai-Rika-Denki-Seisakusho, Niwa-gun, Aichi-ken 480-0195 (JP); ASAHI GLASS COMPANY LTD., Tokyo 100-8405 (JP)
(72) Inventor: ICHIYANAGI, Masayuki c/o TOYOTA JIDOSHA K. K., Toyota-shi, Aichi 471-8571 (JP); SAKAI, Takenobu c/o TOYOTA JIDOSHA K. K., Toyota-shi, Aichi 471-8571 (JP); TAKAI, Noriyuki c/o K.K. TOKAI-RIKA-DENKI-SEISAKU., Niwa-gun, Aichi 480-0134 (JP); YOSHIDA, Hiroshi c/o K.K. TOKAI-RIKA-DENKI-SEISAKU, Niwa-gun, Aichi 480-0134 (JP); FUJIOKA, Norie c/o K.K. TOKAI-RIKA-DENKI-SEISAKUS., Niwa-gun, Aichi 480-0134 (JP); SANADA, Yasuhiro c/o ASAHI GLASS COMPANY, LIMITED, Yokohama-shi, Kanagawa 221-8755 (JP); YONEDA, Takashige c/o ASAHI GLASS COMPANY, LIMITED, Yokohama-shi, Kanagawa 221-8755 (JP)
(74) Representative: KUHNEN & WACKER
(86) International application number: PCT/JP2003/006089
(87) International publication number: WO 2003/101904

(57) **Abstract**

The present invention relates to a metallic oxide film which exhibits a high hardness and is good in terms of the transparency, and which exhibits a hydrophilic property, a defogging and dirtproof property and a self-cleaning property over a long period of time, a production process for the same, and a hydrophilic mirror comprising this hydrophilic metallic oxide film.

The present invention is **characterized in that** the superficial shapes of a metallic oxide film formed on a substrate surface is such that the superficial shapes of the metallic oxide film are such that an arithmetic average roughness Ra is 4-8 nm, a maximum roughness (maximum irregularity difference) Rz is 40-70 nm, a 10-point average roughness Rz_{JIS} is 20-60 nm, and pitches between irregularities are 10-300 nm, the Ra, Rz, Rz_{JIS} and pitches measured by an atomic force microscope.

The metallic oxide film of such superficial shapes is useful as a hydrophilic mirror, and can be used appropriately as automotive outer mirrors.

## Description

### Technical Field

The present invention relates to a metallic oxide film exhibiting a hydrophilic property, a defogging and dirtproof property and a self-cleaning property, metallic oxide film which is used in window materials for constructions, industries, automobiles, and the like, and moreover in mirrors, and a production process for the same, and a hydrophilic mirror comprising this hydrophilic metallic film.

### Background Art

The photocatalytic performance of metallic oxide films, such as a hydrophilic-defogging and dirtproof property or a self-cleaning property, is a phenomenon which emerges by the so-called super-hydrophilic property of titanium oxide film photo-excited by ultraviolet light irradiation, in addition to the conventional photocatalytic action, such as the decomposition of organic substances by the emission of active oxygen. Namely, titanium oxide undergoes charge dissociation as a semiconductor by ultraviolet-light irradiation. A part of electrons and positive holes generated herein react with the titanium oxide's own crystalline lattice, reduce Ti⁴⁺, and simultaneously the positive holes oxidize O₂⁻ to generate O₂ gas, thereby making Ti³⁺ and oxygen-deficient cites in TiO₂ itself. These sites are immediately restored by O₂ in air usually, however, in this instance, are combined with dissociated water. This state combined with dissociated water is a super-hydrophilic state. This hydrated state (Ti³⁺-OH) adsorbed onto the oxygen-deficient portions is a metastabilized state which differs from the ordinary hydrated state, and is oxidized to turn into being hydrophobic by O₂ in air when no light hits it. Namely, when irradiating ultraviolet light onto TiO₂, chemically-adsorbed water in the surface increases, and accordingly a super-hydrophilic phenomenon occurs; when the irradiation is turned off, a super-lipophilic phenomenon appears. In order to utilize this phenomenon in actual fields, a method is adopted in which it is adapted to be a mixture film with SiO₂ that is likely to adsorb water. Namely, since water with SiO₂ adsorbed helps the hydrophilic property of TiO₂, in this instance, it is said that the super-hydrophilic property would sustain for about a week even light irradiation is turned off. Of course, even after the super-hydrophilic property disappears, the super-hydrophilic property recovers when carrying out light irradiation.

Engineering developments utilizing the photocatalytic action based on the aforementioned principle have been carried out recently in various fields. For example, in Japanese Unexamined Patent Publication (KOKAI) No. 2000-192,021, to form a metallic oxide membrane having superficial shapes with regularity which exhibit an irregularity of 25-100 nm in the height direction and whose pitches are 10-100 micron on a substrate surface, such as glass, is proposed, and it says that it is possible to obtain a hydrophilic-defogging and dirtproof membrane which exhibits a high hardness and is good in terms of the transparency, and which maintains the performance over a long period of time. Moreover, in Japanese Unexamined Patent Publication (KOKAI) No. 2000-350,938, to form an adhered-dirt removing photocatalytic film by disposing a solution containing a metal alkoxide on a substrate surface; and thermally decomposing and polymerizing the metal alkoxide with heat of the substrate surface or heat resulting from a low-temperature heat treatment of the substrate is disclosed.

However, since the invention set forth in Japanese Unexamined Patent Publication (KOKAI) No. 2000-192, 021 is such that the surface roughness is large comparatively, regarding the self-purifying action (self-cleaning property), there is a problem that, when oily dirt components adhere, the hydrophilic property cannot be recovered unless irradiating ultraviolet light abundantly, moreover, the adhered-dirt removing photocatalytic film set forth in Japanese Unexamined Patent Publication (KOKAI) No. 2000-350,938 is such that a heat treatment at high temperatures becomes necessary for the thermal decomposition of alkoxide. Accordingly, it cannot be formed on substrates free of heat resistance, moreover, even when it is formed, since distortions might occur by the heat treatment, it has not necessarily been one which is satisfactory.

The present invention has been done in view of such circumstances described above, and is to provide a metallic oxide film whose hardness is high, and which exhibits a hydrophilic property, a defogging and dirtproof property and a self-cleaning property over a long period of time, a production process for the same, and a hydrophilic mirror comprising this hydrophilic metallic oxide film.

### Disclosure of Invention

(1) A hydrophilic-defogging and dirtproof film is characterized in that the superficial shapes of a metallic oxide formed integrally on a substrate surface is such that the superficial shapes of the metallic oxide film are such that an arithmetic average roughness Ra is 4-8 nm, a maximum roughness (maximum irregularity difference) Rz is 40-70 nm, a 10-point average roughness Rz_{JIS} is 20-60 nm, and pitches between irregularities are 10-300 nm, the Ra, Rz, Rz_{JIS} and pitches measured by an atomic force microscope. Here, the metallic oxide film can preferably comprise a metallic oxide making a matrix and being at least one member selected from the group consisting of silica, zirconia, titania and alumina, and ultra-fine particles composed of titanium oxide or tungsten oxide exhibiting a photocatalytic activity. Moreover, when the entirety of the metallic oxide film is taken as 100% by weight (by conversion into oxide solid substances), the metallic oxide making a matrix can be 30-70% by weight, and the content of the ultra-fine particles can desirably be 70-30% by weight.

The substrate having the metallic oxide film can be at least one member selected from the group consisting of glass, metals and ceramics, and a thickness of the metallic oxide film can preferably be 50-300 nm.

(2) A production process for a hydrophilic-defogging and dirtproof film according to the present invention is characterized in that it comprises: a raw material liquid preparation step of adding a metallic oxide and ultra-fine particles into a solvent and mixing therewith;
a film formation step of forming a film by applying the raw material liquid onto a substrate surface; and
a calcination step of calcining the dried film on the substrate.

Here, the atmosphere of the film formation step is such that, in air, a temperature can be 10-30 °C, and a humidity can preferably be 40-75%, moreover, a calcination temperature of the calciantion step can desirably be 200-700 °C.

(3) A hydrophilic mirror according to the present invention comprises a metallic oxide film formed integrally on a substrate surface; and is characterized in that the superficial shapes of this metallic oxide film is such that the superficial shapes of the metallic oxide film are such that an arithmetic average roughness Ra is 4-8 nm, a maximum roughness (maximum irregularity difference) Rz is 40-70 nm, a 10-point average roughness Rz_{JIS} is 20-60 nm, and pitches between irregularities are 10-300 nm, the Ra, Rz, Rz_{JIS} and pitches measured by an atomic force microscope.

Since the composite metallic film according to the present invention comprising the metallic oxide for the matrix formation and the ultra-fine particles exhibiting a photocatalytic activity is such that the matrix has silanol groups (-OH) on the outermost surface, it is hydrophilic inherently and exhibits a defogging property as well. Moreover, the ultra-fine particles can be titanium oxide and/or tungsten oxide, titanium oxide and tungsten oxide which exhibit a photocatalytic function. Since the film surface is turned into being hydrophilic by being exposed to ultraviolet light, it demonstrates a hydrophilic property and a defogging property. In addition, by adapting the film surface to be an irregular shape with microscopic regularity, the period during which the hydrophilic property and defogging property can be maintained is prolonged remarkably. Due to this shape effect, the present composite metallic oxide film can demonstrate a good hydrophilic property, defogging and dirtproof property as well as self-cleaning property over a long period of time.

### Brief Description of the Drawing

Fig. 1 is an atomic-force-microscope-observation photograph for illustrating the superficial shape of a preferable metallic oxide film according to the present invention. It is a representative example of the present invention, and is a uniformly fine shape. Moreover, Fig. 2 is an atomic-force-microscope-observation photograph for illustrating the superficial shape of a metallic oxide film being a comparative example to the present invention. It is a shape falling outside the range of the present invention, and is seen to be a very non-uniform shape. Fig. 3 is a diagram for illustrating a hydrophilic automotive mirror according to the present invention.

### Best Mode for Carrying out the Invention

A first invention according to the present invention relates to a hydrophilic-defogging and dirtproof film. Namely, a hydrophilic-defogging and dirtproof film according to the present invention is characterized in that its superficial shapes are such that the superficial shapes of the metallic oxide film are such that an arithmetic average roughness Ra is 4-8 nm, a maximum roughness (maximum irregularity difference) Rz is 40-70 nm, a 10-point average roughness Rz_{JIS} is 20-60 nm, and pitches between irregularities are 10-300 nm, the Ra, Rz, Rz_{JIS} and pitches measured by an atomic force microscope.

Here, the reasons for adapting the parameters of surface roughness to fall in the respective ranges are hereinafter described. When the arithmetic average roughness Ra is more than 8 nm, and/or when the maximum roughness Rz is less than 40 nm, and/or when the 10-point average roughness Rz_{JIS} is less than 20 nm, since the contact area between the ultra-fine particles having a photocatalytic function and substances to be decomposed becomes less, no sufficient hydrophilic effect resulting from the emergence of photocatalytic function is not obtained. On the other hand, when the arithmetic average roughness Ra is less than 4 nm, and/or when the maximum roughness Rz is more than 70 nm, and/or when the 10-point average roughness Rz_{JIS} is more than 60 nm, the superficial area enlarges sharply, but light is likely to scatter so that there arise problems in practical applications, such as see-through images or reflected images become less likely to see depending on observation angles, and accordingly it is not preferable. Moreover, since the trapping amount of contaminating adherent substances increases, the self-cleaning function is likely to degrade, and consequently it becomes difficult to secure the performance over a long period of time. Moreover, when the pitches between irregularities are less than 10 nm, since the superficial area making the field for the decomposition reaction of contaminants is so small that the catalytic activity is less likely to emerge, moreover, when they exceed 300 nm, the Trapping amount of contaminants increases so that much ultraviolet light is required in order to emerge the hydrophilic property again, and accordingly it is not possible to demonstrate the self-cleaning function sufficiently, and consequently it is not desirable. More desirably, it can be a range of 100-250 nm. Note that the superficial shape observation on the present metallic oxide film was carried out with an atomic force microscope (SPM-9500 made by SHIMADZU). An example of the superficial-shape-observation results is illustrated in Fig. 1. Fig. 1 is one which observed the superficial shapes of an arbitrary 1000 nm × 1000 nm (1 µm × 1 µm) range. The values of the shape parameters are Ra: 5.7 nm, Rz: 55 nm, Rz_{JIS}: 24 nm, and the pitches: 164 nm, respectively, and it is seen to be adapted to be an extremely regular superficial shape. This superficial shape is an appropriate example according to the present invention. Note that the curve in Fig. 1 expresses a probability density function of the height Z (x) in the measurement range (1 µm × 1 µm). That is, the maximum roughness Rz in this range is 55 nm, but the average value is about 28 nm.

The metallic oxide film according to the present invention comprises the metallic oxide as a matrix, and the ultra-fine particles exhibiting a photocatalytic activity. The metallic oxide as a matrix can desirably be at least one member selected from the group consisting of silica, zirconia, titania and alumina. As for the raw materials of these metallic oxides, for example, as for silica raw materials, silica alkoxides such as tetraethoxysilane and tetramethoxysilane, as for main raw materials for zirconia, zirconium butoxide, zirconium acetylacetonate, and the like, moreover, as for main raw materials for titania, tetraisopropxy titanium, tetrabutoxy titanium, titanium acetylacetonate, and the like, in addition, as for main raw materials for alumina, aluminum butoxide, aluminum isopropoxide, and the like, can be exemplified.

The ultra-fine particles exhibiting a photocatalytic activity according to the present invention are such that it is possible to use titanium oxide or tungsten oxide appropriately. In applications requiring a high photocatalytic activity, titanium oxide is such that anatase type titania crystals are preferable. Moreover, the primary particle diameter of these ultra-fine particles exhibiting a photocatalytic activity can desirably be about 5 nm, and the secondary particle diameter can be 50 nm or more. Here, secondary particles are those which primary particles are agglomerated by interaction.

The metallic oxide as a matrix included in the metallic oxide film can desirably be, when the entirety of the metallic oxide film is taken as 100% by weight, 30-70% by weight by solid oxide conversion. When the metallic oxide of the matrix is less than 30% by weight, the durability or abrasion strength of the film degrades so that the actual applications might be limited. Moreover, when it exceeds 70% by weight, since the content of the ultra-fine particles having a photocatalytic function becomes less than 30% by weight, the effect of photocatalytic function might not be demonstrated sufficiently.

The thickness of the metallic oxide film can preferably be 50-300 nm. When it is 50 nm or less, since the particles come off or the amount of the titanium oxide exhibiting a photocatalytic property is less, the photocatalytic property becomes less likely to emerge, and when it exceeds 300 nm, there is a risk of generating cracks at the time of calcination. More preferably, it can be in a range of 70-120 nm.

Note that the substrate used in the present invention is such that it is possible to name glass as a representative. Glass is not limited in particular, and it is possible to use those used ordinarily for automobiles, constructions and furthermore industries. Moreover, the substrate is not limited to glass, even in addition to glass, it is possible to use those, such as metals and ceramics, as far as they do not alter even upon calcination heat treatments.

A second invention according to the present invention is one which relates to a production process for a hydrophilic-defogging and dirtproof film. Namely, the present production process for a hydrophilic-defogging and dirtproof film is characterized in that it comprises: a raw material liquid preparation step of adding a metallic oxide and ultra-fine particles into a solvent and mixing therewith; a film formation step of forming a film by applying this raw material liquid onto a substrate surface; and a calcination step of calcining (adhering closely) the applied and formed film on the substrate.

The raw material liquid preparation step is a step in which a metallic oxide making the matrix of a film and ultra-fine particles are weighed properly and are mixed in a diluent solvent for preparation. As for the diluent solvent, it is possible to exemplify alcohol-base solvents, such as methanol and isopropyl alcohol, for instance. Note that, in order to upgrade the dispersibility of particles, surfactants, high-boiling-point solvents or hydrophilic resins and the like can be added into the solution.

Next, the prepared raw material liquid is applied to a substrate surface, such as glass. As for the application method, it is not limited in particular, however, it is possible to employ spin coating methods, dip coating methods, reverse coating methods, flexographic printing methods, in addition to them, roll coating methods, curtain coating methods, moreover, nozzle coating methods, screen printing methods, and the like. When forming a film by these methods, the total solid concentration can desirably be about 0.3-5% by weight. Note that, in order to control the superficial shapes of the film, the application can desirably be carried out in such an atmosphere that the temperature is 10-30 °C and the humidity is 40-75%. When the temperature of the application atmosphere is less than 10 °C and the humidity is less than 40%, since the surface roughness and superficial area become smaller, it is not preferable because the photocatalytic property is less likely to emerge. Moreover, when a film is formed in such an atmosphere that the temperature exceeds 30 °C and the humidity exceeds 75%, since the surface roughness becomes so large that the dirt trapping amount increases, the photocatalytic property degrades so that it is not appropriate. More preferably, the application temperature can be 25 ± 5 °C, and the humidity can be 50-65%.

As for the calcination treatment, the calcination temperature can be 200-700 °C, and the calcination time depends on the calcination temperature, however, it can preferably be for about 60 minutes at 300 °C, and for about 3-10 minutes at 700 °C. When the calcination temperature is less than 200 °C, the mechanical strength of the film is insufficient, and when it exceeds 700 °C, the crystal system transforms, or, even if the temperature is heightened, since no further performance improvement can be appreciated, it is uneconomical. Moreover, depending on the types and applications of the substrate, the calcination treatment can be carried out simultaneously with the other heat treatments. For example, when the substrate is glass, the calcination treatment can be carried out simultaneously with the thermal reinforcement treatments or thermal bending of glass.

In accordance with the present production process, it is possible to stably produce the present hydrophilic-defogging and dirtproof film.

A third invention according to the present invention relates to a hydrophilic mirror. For example, in automotive applications, when water droplets adhere onto an automotive outer mirror in rainy weathers, the reflected images are distorted so that it becomes difficult to secure the rear views. Especially, in nights, since the light from the following vehicles causes light scattering by the water droplets adhered on the mirror surface, it becomes virtually impossible for the driver to recognize the reflected images. However, in the present hydrophilic mirror, since the adhered water droplets make a liquid film to spread uniformly, the reflected images are not distorted. Moreover, it does not scatter the light of the headlamps of the following vehicles in nights, and accordingly it is always possible to secure satisfactory reflected images. Moreover, since the watery film is made on the mirror surface, the mirror is not defogged, and additionally it is possible to demonstrate the self-cleaning function as well which can wash away deposited dirt with water, such as rainfalls, with ease.

Namely, a hydrophilic mirror is characterized in that it comprises a metallic oxide film on a mirror surface, the metallic oxide film whose superficial shapes are such that the superficial shapes of the metallic oxide film are such that an arithmetic average roughness Ra is 4-8 nm, a maximum roughness (maximum irregularity difference) Rz is 40-70 nm, a 10-point average roughness Rz_{JIS} is 20-60 nm, and pitches between irregularities are 10-300 nm, the Ra, Rz, Rz_{JIS} and pitches measured by an atomic force microscope. This metallic oxide film is the hydrophilic-defogging and dirtproof film being the first invention comprising the above-described metallic oxide as the matrix and the ultra-fine particles exhibiting a photocatalytic activity.

The formation of the metallic oxide film onto the mirror surface can be carried out in the same manner as the second invention. However, in case of forming a metallic oxide film on a mirror and calcining it thereon, when calcining it at 400 °C or more, since distortions might arise in the mirror, it is preferable to calcine it as low temperature as possible. In this instance, at 200-350 °C, calcination for 10-120 minutes is preferable. Especially preferable calcination conditions can be, at 200-300 °C, 10-60 minutes.

The physical properties relating to the hydrophilic property as well as the hydrophilicity-maintaining property and the defogging property depend greatly on the compositions and shapes of film surface. A hydrophilic membrane formed on a substrate by the present invention can sustain the hydrophilic property as well as the defogging and dirtproof property, because the film surface is adapted to be the optimum irregular shapes microscopically so that dirt is less likely to adhere thereto and the ultra-fine particles exhibiting photocatalytic performance can demonstrate the photocatalytic performance sufficiently.

### (EXAMPLES)

Hereinafter, the present invention will be described in detail with reference to examples. However, the present invention is not limited to these examples.

### [Metallic Oxide Film]

### (Evaluation Method)

The superficial shapes of membranes were measured by the following.

With an atomic force microscope (SPM-9500 made by SHIMADZU), the arithmetic average roughness Ra, maximum roughness (maximum irregularity difference) Rz and 10-point average roughness Rz_{JIS} were measured. Note that the definition of the respective parameters is based on JISB0601. Moreover, the linear roughness was measured at ten arbitrary positions, and then the pitches were adapted to be twice as much as the resulting irregularity average roughness interval (Sm).

The characteristics of metallic oxide films were measured by the following methods.

### 1) Initial Hydrophilic Property Evaluation

A contact angle of water on film surfaces immediately after the film formation was measured. The measurement was carried out with a contact-angle measuring apparatus made by KYOWA KAIMEN KAGAKU Co., Ltd., and those whose water-droplet contact angle after being irradiated by ultraviolet light whose intensity was 1 mW/cm² for 24 hours continuously was 5° or less were regarded as acceptable. Note that the ultraviolet light intensity was measured by an ultraviolet light intensity meter made by TOPCON Co., Ltd.

### 2) Evaluation of Film Anti-bruising Property

With a Tabor abrasion tester (ABRASER made by TABOR Corp.), CS-10F was adapted to be an abrasion ring, the haze-value variation ΔHz (film haze value) after 100 revolutions at a load of 2.45 N was measured, and those with 5% or less were regarded as acceptable. Note that the haze values were such that ΔHz's were found by measuring them with a haze meter made by SUGA SHIKENKI Co., Ltd. before and after the abrasion test.

### 3) Photocatalytic Performance Evaluation

After confirming that the hydrophilic property of the sample surfaces was to be the water-droplet contact angle of 5° or less, oleic acid was applied to the sample surfaces, and was wiped up with cotton to such extent that no oil film was appreciated visually after leaving them in a 25 °C atmosphere with a relative humidity of 50% for 1 hour. Thereafter, they were irradiated by ultraviolet light whose intensity was 1 mW/cm² continuously, the contact angle was measured for every 1 hour, and the time required for the water-droplet contact to reach 5° or less was adapted to be the photodecomposition time. Those whose photodecomposition time was within 5 hours were regarded as acceptable. The evaluation results are set forth in Table 1.

**TABLE 1**

| | | Example | | | | Comp. Example | | | |
|---|---|---|---|---|---|---|---|---|---|
| | | 1 | 2 | 3 | 4 | 1 | 2 | 3 | 4 |
| Film Forming Conditions | Temperature °C | 25 | 25 | 20 | 28 | 23 | 25 | 28 | 15 |
| | Humidity % | 60 | 60 | 60 | 55 | 80 | 75 | 40 | 40 |
| Superficial Shapes | Ra | 5.1 | 5.7 | 5.9 | 6.2 | 12 | 12 | 7.6 | 3.8 |
| | Rz | 46 | 55 | 54 | 54 | 90 | 92 | 75 | 29 |
| | Rz_{JIS} | 26 | 24 | 36 | 40 | 51 | 68 | 44 | 18 |
| | Pitches | 152 | 164 | 172 | 168 | 262 | 248 | 586 | 122 |
| Initial Hydrophilic Property | | ○ | ○ | ○ | ○ | ○ | ○ | ○ | ○ |
| Film Hardness | | ○ | ○ | ○ | ○ | ○ | ○ | ○ | ○ |
| Photocatalytic Property | | ○ | ○ | ○ | ○ | × | × | ○ | × |
| Light Scattering | | None | None | None | None | None | None | Occurred | None |
| Overall Judgement | | ○ | ○ | ○ | ○ | × | × | × | × |

### (Example No. 1)

### ① Membrane Raw-material Liquid Preparation

Sodium ions were removed from sodium silicate (molar ratio: 3.83) using a cation-exchange resin, and a silicate oligomer solution was obtained. To 2-propanol, a dispersion liquid of anatase-type titanium fine particles (secondary particle diameter: 56 nm) and the silicate oligomer solution were added so as to establish TiO2 Conversion : SiO2 Conversion = 60 : 40, were stirred, and were adapted to be a coating solution (membrane raw-material liquid). Note that the solid content of the solution was adapted to be 3% by weight by overall oxide conversion. Moreover, the secondary particle diameter was measured by a grain-size distribution meter, MICROTRAC UPA model: 9340 (made by HONEYWELL Corp.).

### ② Application and Calcination

As for a substrate, 100 mm × 100 mm soda lime glass whose thickness was 2.1 mm was used, an application surface was grounded fully with cerium oxide, was thereafter washed with tap water, was rinsed with ion-exchanged water, and water was further removed, was thereafter air-blown, and was adapted to be a coating substrate. On a surface of the thus prepared glass substrate, a film was formed by a spin coating method (3,000 rpm) with the aforementioned coating solution. The conditions in the film formation were such that the temperature was 25 °C, and the relative humidity was 60% in air atmosphere. Thereafter, calcination was carried out at 250 °C for 1 hour.

A metallic oxide film obtained as described above was such that the superficial shapes were Ra = 5.1 nm, Rz = 46 nm, Rz_{JIS}= 26 nm, and pitches = 152 nm.

The weight ratio between the silica and the titania ultra-fine particles in the metallic oxide film by oxide conversion was the same as the membrane raw-material liquid.

Moreover, the film thickness was about 70 nm when being measured with a transmission electron microscope (TEM). Note that, when the initial hydrophilic property was evaluated, the contact angle of the membrane with respect to water was as good as < 3° (less than 3°). The other characteristics, such as the film hardness, the photocatalytic property and so on, were also good as set forth in Table 1.

### (Example No. 2)

Except that the atmospheric conditions in the film formation were adapted so that the humidity was 60% and the temperature was 25 °C, and that the calcination conditions were adapted to be 300 °C for 1 hour, it was carried out in the same manner as Example No. 1, and a metallic oxide film was obtained. The superficial shapes of the film were Ra = 5.7 nm, Rz = 55 nm, Rz_{JIS} = 24 nm, and pitches = 164 nm. Moreover, the film thickness was 80 nm. Note that, when the initial hydrophilic property was evaluated, the contact angle of the membrane with respect to water was as good as < 3°, and simultaneously the evaluation results of the other characteristics were also good as set forth in Table 1. The observation results of the superficial shapes by the atomic force microscope are illustrated in Fig. 1. It is appreciated to be a uniformly fine superficial shape.

### (Example No. 3)

Except that the atmospheric conditions in the film formation were adapted so that the humidity was 60% and the temperature was 20 °C, it was carried out in the same manner as Example No. 2, and a metallic oxide film was obtained. The superficial shapes of the film were Ra = 5.9 nm, Rz = 54 nm, Rz_{JIS} = 36 nm, and pitches = 172 nm. Note that, in the evaluation of the initial hydrophilic property, the contact angle of the membrane with respect to water was as good as < 3°. The evaluation results of the other characteristics were also good as set forth in Table 1.

### (Example No. 4)

Except that the atmospheric conditions in the film formation were adapted so that the humidity was 55% and the temperature was 28 °C, it was carried out in the same manner as Example No. 2, and a metallic oxide film was obtained. The superficial shapes of the film were Ra = 6.2 nm, Rz = 54 nm, Rz_{JIS} = 40 nm, and pitches = 168 nm. Note that, in the evaluation of the initial hydrophilic property, the contact angle of the membrane with respect to water was as good as 3°, and the evaluation results of the other characteristics were also good as set forth in Table 1.

### (Comparative Example No. 1)

Except that the atmospheric conditions in the film formation were adapted so that the humidity was 80% and the temperature was 23 °C, it was carried out in the same manner as Example No. 2, and a metallic oxide film was obtained. The superficial shapes of the film were Ra = 12 nm, Rz = 90 nm, Rz_{JIS} = 51 nm, and pitches = 262 nm. Note that, in the evaluation of the initial hydrophilic property, the contact angle of the membrane with respect to water was as good as 3°, however, since both of the Ra and Rz became greater than the ranges according to the present invention, the time required for the water-droplet contact angle to be 5° or less became 6 hours or more, the photocatalytic property was unacceptable. Moreover, the observation results of the superficial shapes by the atomic force microscope are illustrated in Fig. 2. From Fig. 2, the metallic oxide film according to the present testing sample was such that the superficial shapes were irregular, large bulky portions and fine granular portions were appreciated, and moreover, deep valley-shaped voids surrounded by the bulky portions were appreciated as well.

### (Comparative Example No. 2)

Except that the atmospheric conditions in the film formation were adapted so that the humidity was 75% and the temperature was 25 °C, it was carried out in the same manner as Example No. 2, and a metallic oxide film was obtained. The superficial shapes of the film were Ra = 12 nm, Rz = 92 nm, Rz_{JIS} = 68 nm, and pitches = 248 nm. All of the parameters, Ra, Rz and Rz_{JIS}, became greater than the ranges according to the present invention. In the evaluation of the initial hydrophilic property, the contact angle of the membrane with respect to water was as good as 3°, however, in the evaluation of the photocatalytic performance, since the time required for the water-droplet contact angle to be 5° or less became 6 hours or more, the photocatalytic property was unacceptable.

### (Comparative Example No. 3)

Except that the atmospheric conditions in the film formation were adapted so that the humidity was 40% and the temperature was 28 °C, it was carried out in the same manner as Example No. 2, and a metallic oxide film was obtained. The superficial shapes of the film were Ra = 7.6 nm, Rz = 75 nm, Rz_{JIS} = 44 nm, and pitches = 586 nm. The Ra and Rz_{JIS} fell within the ranges according to the present invention, however, the Rz became a great value, and the pitches became the greatest value among the present testing samples. In the evaluation of the initial hydrophilic property, the contact angle of the membrane with respect to water was as good as 3°, and additionally the film hardness and photocatalytic property were also good results as set forth in Table 1. However, since light scattering was appreciated and the reflected images became less likely to see depending on viewing angles, it was unacceptable.

### (Comparative Example No. 4)

Except that the atmospheric conditions in the film formation were adapted so that the humidity was 40% and the temperature was 15 °C, it was carried out in the same manner as Example No. 2, and a metallic oxide film was obtained. The superficial shapes of the film were Ra = 3.8 nm, Rz = 29 nm, Rz_{JIS} = 18 nm, and pitches = 122 nm. All of the parameters became smaller values than the ranges according to the present invention. In the evaluation of the initial hydrophilic property, the contact angle of the membrane with respect to water was as good as 3°, and the film hardness was also a good result as set forth in Table 1. However, in the evaluation of the photocatalytic performance, since the time required for the water-droplet contact angle to be 5° or less became 6 hours or more, the photocatalytic property was unacceptable.

### [Hydrophilic Mirror]

### (Example No. 5)

An automotive outer mirror being adapted to be the present invention is shown in Fig. 3. The present example is such that the metallic oxide film of the first invention according to the present invention is coated on the surface of the mirror. The representative values of the superficial shapes of the metallic oxide film were Ra = 5.7 nm, Rz = 55 nm, Rz_{JIS} = 24 nm, and pitches = 164 nm. Moreover, the film thickness was 80 nm.

### Industrial Applicability

The present invention is such that the microscopic superficial shapes of metallic oxide films which include ultra-fine particles exhibiting a photocatalytic function are adapted to be a finely regular shape. As a result, it is possible to obtain films whose anti-bruising property is high, and which exhibit a hydrophilic-defogging and dirtproofing-self-cleaning function over a long period of time. The metallic oxide film being adapted to be the present invention is suitable when being used in hydrophilic mirrors.

## Claims

1. A hydrophilic-defogging and dirtproof film, **characterized in that** a metallic oxide film is formed integrally on a substrate surface, and
the superficial shapes of the metallic oxide film are such that an arithmetic average roughness Ra is 4-8 nm, a maximum roughness (maximum irregularity difference) Rz is 40-70 nm, a 10-point average roughness Rz_{JIS} is 20-60 nm, and pitches between irregularities are 10-300 nm, the Ra, Rz, Rz_{JIS} and pitches measured by an atomic force microscope.

2. The hydrophilic-defogging and dirtproof film set forth in claim 1, wherein said metallic oxide film comprises a metallic oxide making a matrix, and ultra-fine particles exhibiting a photocatalytic activity.

3. The hydrophilic-defogging and dirtproof film set forth in claim 2, wherein said metallic oxide is at least one member selected from the group consisting of silica, zirconia, titania and alumina.

4. The hydrophilic-defogging and dirtproof film set forth in claim 2 or 3, wherein said ultra-fine particles comprise titanium oxide and/or tungsten oxide.

5. The hydrophilic-defogging and dirtproof film set forth in either one of claims 1 through 4, wherein, when the entirety of said metallic oxide film is taken as 100% by weight, said metallic oxide is 30-70% by weight, and said ultra-fine particles are 70-30% by weight.

6. The hydrophilic-defogging and dirtproof film set forth in either one of claims 1 through 5, wherein a thickness of said metallic oxide film is 50-300 nm.

7. The hydrophilic-defogging and dirtproof film set forth in either one of claims 1 through 6, wherein said substrate is at least one member selected from the group consisting of glass, metals and ceramics.

8. A production process for a hydrophilic-defogging and dirtproof film, **characterized in** comprising a production process of a metallic oxide film, comprising:
a raw material liquid preparation step of adding a metallic oxide and ultra-fine particles into a solvent and mixing therewith;
a film formation step of forming a film by applying the raw material liquid onto a substrate surface; and
a calcination step of calcining the formed film on the substrate,
wherein an atmosphere of the film formation step is such that a temperature is 10-30 °C, and a humidity is 40-75%.

9. The production process for a hydrophilic-defogging and dirtproof film set forth in claim 8, wherein a calcination temperature of said calcination step is 200-700 °C.

10. A hydrophilic mirror comprising
a metallic oxide film formed integrally on a substrate surface,
**characterized in that** the superficial shapes of the metallic oxide film are such that an arithmetic average roughness Ra is 4-8 nm, a maximum roughness (maximum irregularity difference) Rz is 40-70 nm, a 10-point average roughness Rz_{JIS} is 20-60 nm, and pitches between irregularities are 10-300 nm, the Ra, Rz, Rz_{JIS} and pitches measured by an atomic force microscope.

11. The hydrophilic mirror set forth in claim 10, wherein said hydrophilic mirror is an automotive mirror.
